# EUROPEAN PATENT APPLICATION

(11) **EP 3 343 669 A1**
(43) Date of publication of application: **04.07.2018**
(21) Application number: 17210415.0
(22) Date of filing: 22.12.2017
(51) Int. Cl.: H01M 2/10, H01M 10/6556, H01M 10/613

(54) **BATTERY PACK HOUSING**

(30) Priority: 03.01.2017 KR 20170000640
(71) Applicant: Samsung SDI Co., Ltd., Yongin-si, Gyeonggi-do 17084 (KR)
(72) Inventor: LEE, Kye Youn, 17084 Gyeonggi-do (KR); YOON, Gwang Taek, 17084 Gyeonggi-do (KR); AHN, Jang Gun, 17084 Gyeonggi-do (KR); KEUM, Jae Young, 17084 Gyeonggi-do (KR)
(74) Representative: Mounteney, Simon James

(57) **Abstract**

A battery pack housing for an automotive vehicle is disclosed. The battery pack housing includes a bottom plate shaped of a plate fabricated by extrusion molding to form an upper plate and a lower plate integrated into a single body and including a throughhole passing through the inside of the bottom plate in a direction parallel with a plate surface from a region of the upper plate or the lower plate; a first sidewall coupled to one edge of the bottom plate so as to come into contact with a first end of the throughhole and including a first hollow and a first communicating hole formed therein, the first hollow passing through the inside of the first sidewall in a lengthwise direction of the first sidewall and the first communicating hole connecting the throughhole of the bottom plate and the first hollow; a second sidewall coupled to the other edge of the bottom plate so as to come into contact with a second end of the throughhole, the second end opposing the first end, and including a second hollow and a second communicating hole formed therein, the second hollow passing through the inside in a lengthwise direction of the second sidewall and the second communicating hole connecting the throughhole of the bottom plate and the second hollow; an inlet formed in the first sidewall or the second sidewall and allowing cooling water to be injected into the first hollow or the second hollow; and; an outlet formed in the first sidewall or the second sidewall and allowing the cooling water to be discharged from the first hollow or the second hollow to the outside.

## Description

### BACKGROUND

### 1. Field

The present invention relates to a battery pack housing and a battery pack including the same.

### 2. Description of the Related Art

In general, an electric device, such as a laptop computer or an electric vehicle, uses a battery pack including a plurality of battery modules connected in series and/or in parallel as a portable power source. The battery pack housing separately includes a built-in pipe that allows cooling water to pass through to protect the battery modules from overheating. In addition, a separate cover is provided to protect the battery pack from shocks applied from a bottom portion of an automotive vehicle, etc.

The above information disclosed in this Background section is only for enhancement of understanding of the background of the described technology and therefore it may contain information that does not form the prior art that is already known in this country to a person of ordinary skill in the art.

### SUMMARY

Embodiments of the present invention set-out to provide an effective battery pack housing which can sufficiently protect a battery pack from shocks applied from a bottom portion of an automotive vehicle, etc. without a separate protective cover by providing a rigid protective bottom plate while reducing the number of components.

Embodiments of the present invention also seek to provide a battery pack housing having a built-in cooling water passageway.

The above and other aspects of the present invention will be described in or be apparent from the following description of embodiments thereof.

According to an aspect of the present invention, there is provided a battery pack housing for an automotive vehicle, the battery pack housing including a bottom plate shaped of a plate fabricated by extrusion molding to form an upper plate and a lower plate integrated into a single body and including a throughhole passing through the inside of the bottom plate in a direction parallel with a plate surface from a region of the upper plate or the lower plate; a first sidewall coupled to one edge of the bottom plate so as to come into contact with a first end of the throughhole and including a first hollow and a first communicating hole formed therein, the first hollow passing through the inside of the first sidewall in a lengthwise direction of the first sidewall and the first communicating hole connecting the throughhole of the bottom plate and the first hollow; a second sidewall coupled to the other edge of the bottom plate so as to come into contact with a second end of the throughhole, the second end opposing the first end, and including a second hollow and a second communicating hole formed therein, the second hollow passing through the inside in a lengthwise direction of the second sidewall and the second communicating hole connecting the throughhole of the bottom plate and the second hollow; an inlet formed in the first sidewall or the second sidewall and allowing cooling water to be injected into the first hollow or the second hollow; and; an outlet formed in the first sidewall or the second sidewall and allowing the cooling water to be discharged from the first hollow or the second hollow to the outside.

Preferably, at least one of the first sidewall and the second sidewall is fabricated by extrusion molding during extrusion.

The battery pack housing may further include closing members for closing both ends of the first hollow of the first sidewall and the second hollow of the second sidewall, respectively.

The throughhole may be formed in the upper plate.

In addition, the upper plate may include a protrusion part extending from the upper plate to the lower plate to communicate with the lower plate and the throughhole may be formed in the protrusion part.

Here, the protrusion part may be formed to function as a bridge for connecting the upper plate and the lower plate.

In addition, a cross section of the throughhole may have an area gradually increasing toward the upper plate.

Here, the cross sectional center of the protrusion part or the throughhole may be closer to the upper plate than to the lower plate.

In addition, the throughhole of the bottom plate may include a plurality of throughholes to then be arranged to be parallel with each other.

The inlet and the outlet may be formed in the first sidewall and may be spaced apart from each other in a lengthwise direction of the first sidewall, a partition plate may be installed on the first hollow of the first sidewall to spatially separate the inlet and the outlet from each other, and the inlet and the outlet may be arranged to communicate with some of the plurality of throughholes.

In addition, the inlet may be formed in the first sidewall, the outlet may be formed in the second sidewall, and a first partition plate and a second partition plate may be formed respectively for spatially separating two arbitrary throughholes adjacent with each other on the first hollow of the first sidewall and for spatially separating two arbitrary throughholes adjacent with each other on the second hollow of the second sidewall, wherein on the basis of a direction perpendicular to the direction in which the throughholes are formed, the inlet, the first partition plate, the second partition plate and the outlet are sequentially arranged in that order.

Here, some of the plurality of throughholes in the bottom plate may be differently formed from some other throughholes in view of area and shape of a cross section perpendicular to the direction in which the throughholes are formed.

The battery pack housing may further include a reinforcement rib formed to extend between the first sidewall and the second sidewall.

In addition, the battery pack housing may further include a third sidewall formed at an edge of the bottom plate, the edge not being coupled to the first sidewall or the second sidewall.

At least some of the above features that accord with the invention and other features according to the invention are set-out in the claims.

As described above, the battery pack housing according to the present invention can sufficiently protect a battery pack from shocks applied from a bottom portion of an automotive vehicle, etc. without a separate protective cover.

In addition, the battery pack housing according to the present invention includes a built-in cooling water passageway by fabricating various components through, for example, extrusion molding, thereby simplifying the configuration thereof and facilitating the manufacturing process.

### BRIEF DESCRIPTION OF DRAWINGS

FIG. 1 is a perspective view of a battery pack according to an embodiment of the present invention;
FIG. 2 is a perspective view of a battery pack housing according to an embodiment of the present invention;
FIG. 3 is a perspective view of a bottom plate of the battery pack housing according to an embodiment of the present invention;
FIG. 4 is a side view of a bottom plate of the battery pack housing according to an embodiment of the present invention;
FIGS. 5A to 5E are cross-sectional views of various types of bottom plates of the battery pack housing according to an embodiment of the present invention;
FIGS. 6 and 7 are side views of a first sidewall of the battery pack housing according to an embodiment of the present invention;
FIG. 8 is a partially cross-sectional view taken by a plane 'A' defined by dotted line of FIG. 2;
FIG. 9 is a cross-sectional view taken along the line B-B of FIG. 2; and
FIGS. 10 and 11 illustrate modified passageways of cooling water.

### DETAILED DESCRIPTION

Hereinafter, embodiments of the present invention will be described in detail.

The present invention may, however, be embodied in many different forms and should not be construed as being limited to the embodiments set forth herein. Rather, these embodiments are provided so that this disclosure will be thorough and and will convey the concept of the invention to those skilled in the art, and the present invention will only be defined by the appended claims.

In the drawings, the thickness of layers and regions are exaggerated for clarity. Like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present and the element A and the element B are indirectly connected to each other.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present disclosure.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "on" or "above" the other elements or features. Thus, the exemplary term "below" can encompass both an orientation of above and below.

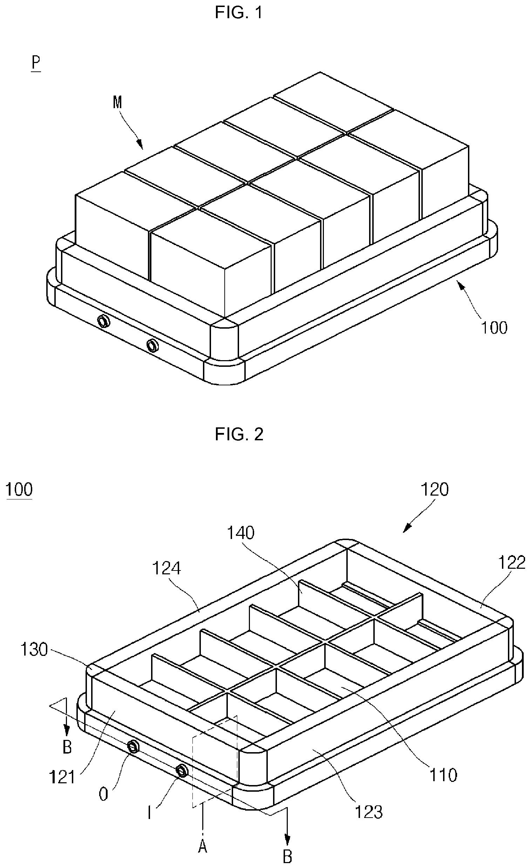

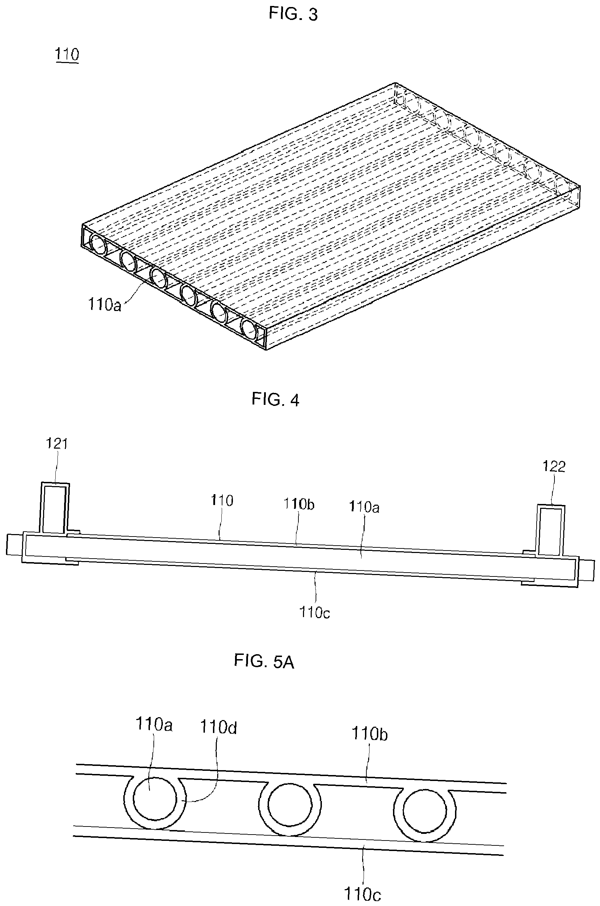

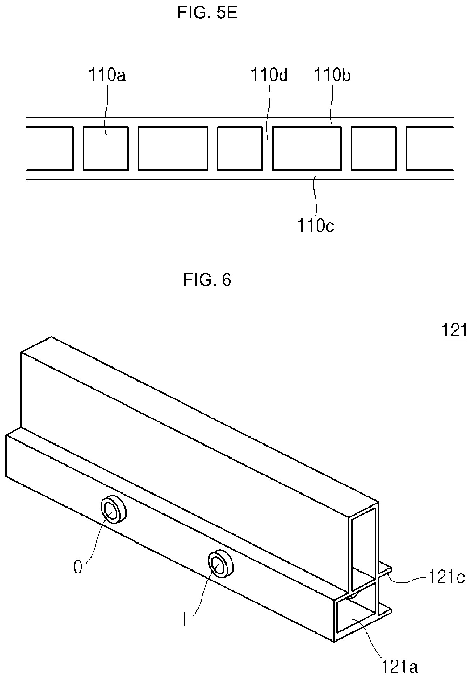

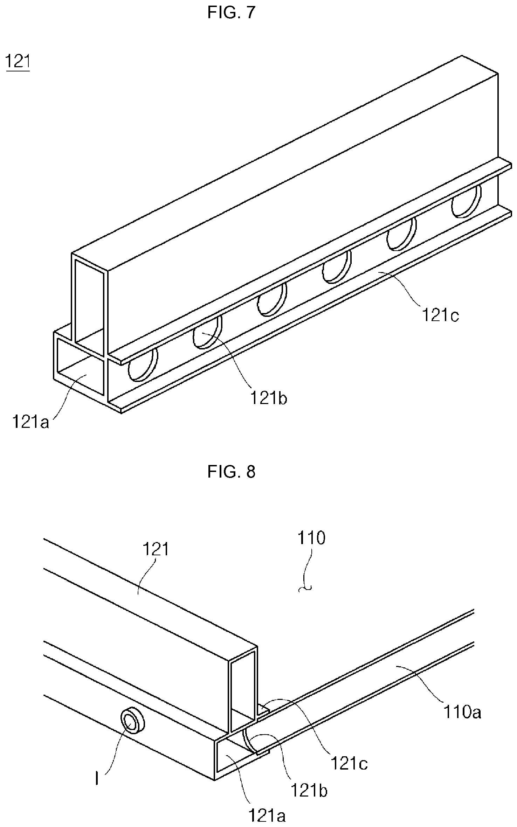

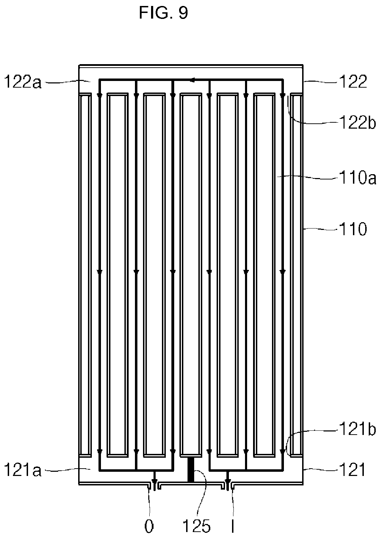

FIG. 1 is a perspective view of a battery pack (P) according to an embodiment of the present invention. In FIG. 1, shapes of battery modules (M) are just schematically shown. FIG. 2 is a perspective view of a battery pack housing according to an embodiment of the present invention. FIG. 3 is a perspective view of a bottom plate of the battery pack housing according to an embodiment of the present invention. FIG. 4 is a side view of the bottom plate of the battery pack housing according to an embodiment of the present invention. FIGS. 5A to 5E are cross-sectional views of various types of the bottom plate of the battery pack housing according to an embodiment of the present invention. FIGS. 6 and 7 are side views of a first sidewall of the battery pack housing according to an embodiment of the present invention, illustrating states when viewed in different directions. FIG. 8 is a partially cross-sectional view taken by a plane 'A' defined by dotted line of FIG. 2. FIG. 9 is a cross-sectional view taken along the line B-B of FIG. 2, illustrating only the bottom plate, the first sidewall, a second sidewall and a partition plate.

For clarity, some of various components shown in the respective figures are emphasized in view of size and proportion, and it will be obvious to one skilled in the art that the size and proportion of each component can be appropriately modified.

First, referring to FIGS. 1 and 2, the battery modules M are installed on the battery pack housing 100 and include a bottom plate 110, a sidewall 120, closing members 130 and a reinforcement rib 140.

Specifically, referring to FIG. 3, the bottom plate 110 has a substantially plate-like shape to support bottom portions of the battery modules M. The battery modules M are generally installed on the bottom plate 110. In consideration of the overall spatial utilization efficiency of the battery pack P, the bottom plate 110 is preferably fabricated to have a substantially rectangular shape. However, the bottom plate 110 may have a circular shape or other polygonal shapes. The following description will be given with regard to a case where the bottom plate 110 has a rectangular shape by way of example, as illustrated in FIG. 3.

The bottom plate 110 includes a throughhole 110a passing through the inside thereof in a direction parallel to a plate surface from one edge to the other edge. The throughhole 110a may include a plurality of throughholes to then be arranged to be parallel with each other. As will later be described, the throughhole 110a may function as a passageway of cooling water and may also function to reduce the overall weight of the battery pack by eliminating unnecessary portions of the bottom plate 110.

In particular, in order to make the bottom plate 110 have the above-mentioned structure, the bottom plate 110 may be fabricated by extrusion molding. In this case, the throughhole 110a will be formed in an extrusion direction along a track which a mandrel passes during extrusion molding.

Since the throughhole 110a is naturally formed by the mandrel during extrusion without the need for separately forming a hole in the bottom plate 110, the fabricating time and cost can be reduced. In addition, the length of the bottom plate 110 may be easily adjusted by cutting a long-extruded object by a predetermined length as required. Further, the cut objects may be attached in a direction perpendicular to the direction in which the objects are extruded, thereby obtaining the bottom plate 110 having variable widths.

Referring to FIG. 4, the bottom plate 110 has a double-plate structure including an upper plate 110b and a lower plate 110c. The bottom plate 110 is formed by extrusion molding, so that the upper plate 110b and the lower plate 110c are extruded as an integrated single plate. The throughhole 110a is also formed during this process. In addition, a region where the throughhole 110a is not formed remains empty between the upper plate 110b and the lower plate 110c, so that it becomes a shock absorbing space for protecting the battery pack from external shocks.

Meanwhile, the sidewall 120 is coupled to an edge of the bottom plate 110 to support side surfaces of the battery modules M. If the bottom plate 110 is shaped of a rectangle, as stated above, the sidewall 120 may include four sidewalls and may be coupled to edges of the rectangle. In the following description, the four sidewalls are referred to as a first sidewall 121, a second sidewall 122, a third sidewall 123 and a fourth sidewall 124, respectively.

Referring to FIGS. 5A to 5E, cross-sectional views of various types of bottom plates of the battery pack according to an embodiment of the present invention are illustrated.

Referring first to FIG. 5A, a protrusion part 110d protruding from the upper plate 110b of the bottom plate 110 toward the lower plate 110c is formed on the upper plate 110b of the bottom plate 110. The throughhole 110a is formed at the center of the protrusion part 110d. The protrusion part 110d serves to support a portion between the upper plate 110b and the lower plate 110c.

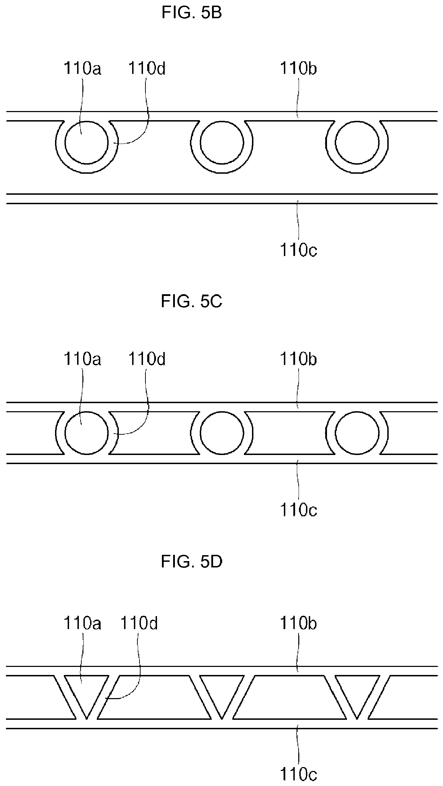

Referring to FIGS. 5A and 5B, the protrusion part 110d is formed only on the upper plate 110b. The protrusion part 110d illustrated in FIG. 5A is molded and extruded so as to come into contact with the lower plate 110c at its end, while the protrusion part 110d illustrated in FIG. 5B is molded and extruded so as not to come into contact with the lower plate 110c at its end. In this case, the throughhole 110a is extruded to be formed on the upper plate 110b during extrusion molding.

Referring to FIG. 5C, the protrusion part 110d is formed in the type of a bridge connected to both of the upper plate 110b and the lower plate 110c. The protrusion part 110d is formed to be spaced a predetermined distance apart from the upper plate 110b and the lower plate 110c with an empty space between the upper plate 110b and the lower plate 110c. In addition, the throughhole 110a is formed at the center of the protrusion part 110d.

Referring to FIG. 5D, the protrusion part 110d is formed to have an inverse triangular shape, downwardly tapering away from the upper plate 110b. Here, a lower end of the protrusion part 110d may be connected to the lower plate 110c or may be disconnected from the lower plate 110c.

Referring to FIG. 5E, the protrusion part 110d is formed between the upper plate 110b and the lower plate 110c to have a rectangular shape.

Meanwhile, referring to FIGS. 5A, 5B and 5D, the throughhole 110a or the protrusion part 110d is formed only on the upper plate 110b. Alternatively, the throughhole 110a or the protrusion part 110d may be formed to be closer to the upper plate 110b than to the lower plate 110c. In addition, the cross sectional center of the protrusion part 110d or the throughhole 110a is closer to the upper p!ate110b than to the lower plate 110c. This is for the purpose of increasing a cooling effect by allowing the cooling water flowing through the throughhole 110a to flow closer to the battery pack disposed on the upper plate 110b of the bottom plate 110.

Meanwhile, referring to FIGS. 6 to 8, a first hollow 121 a passing through the inside of the first sidewall 121 is formed in the first sidewall 121 in a lengthwise direction of the first sidewall 121. As will later be described, the first hollow 121 a may function as a passageway of cooling water and may also function to reduce the overall weight of the battery pack by eliminating unnecessary portions of the first sidewall 121. In addition, as the result of forming the first hollow 121, the first sidewall 121 may have a double wall structure, which prevents an internal wall of the first sidewall 121 from being deformed to a certain extent when an external wall of the first sidewall 121 is deformed due to external shocks, thereby effectively protecting the battery modules M.

In order to make the first sidewall 121 have the above-mentioned structure, the first sidewall 121 may also be fabricated by extrusion molding. In this case, the first hollow 121 a will be formed in an extrusion direction along a track which a mandrel passes during extrusion molding.

The first sidewall 121 is coupled to an edge of the bottom plate 110 so as to come into contact with a first end of the throughhole 110a of the bottom plate 110. Here, a first communicating hole 121 b connecting the throughhole 110a and the first hollow 121 a is formed in the first sidewall 121. If the throughhole 110a includes a plurality of throughholes, the first communicating hole 121 b may also include a plurality of first communicating holes. In this case, the plurality of first communicating holes may be located at the respective places where the plurality of throughholes are positioned. Alternatively, some of the plurality of first communicating holes may be located at places where only some of the plurality of throughholes are positioned. In the former case, all of the throughholes 110a may communicate with the first hollow 121 a to function as passageways of cooling water. However, in the latter case, only some of the throughholes 110a will communicate with the first hollow 121 a to function as passageways of cooling water while the rest of the throughholes 110a, first ends of which are closed by the first sidewall 121, will just serve to reduce the overall weight of the battery pack.

In addition, a place in the first sidewall 121 to be coupled to the bottom plate 110 may be defined in the first sidewall 121, thereby forming a coupling guide 121 c for increasing assembling efficiency.

Like the first sidewall 121, the second sidewall 122 may also be fabricated by extrusion molding, so that a second hollow 122a passing through the inside of the second sidewall 122 in a lengthwise direction of the second sidewall 122 is formed in the second sidewall 122 by extrusion molding. In addition, the second sidewall 122 is coupled to the other edge of the bottom plate 110 so as to come into contact with a second end of the throughhole 110a of the bottom plate 110, and a second communicating hole 122b connecting the throughhole 110a and the second hollow 122a. Other details are substantially the same with those of the first sidewall 121, as described above, and repeated descriptions thereof will not be given.

Meanwhile, opposite ends of each of the first hollow 121 a of the first sidewall 121 and the second hollow 122a of the second sidewall 122 are closed, respectively, which may be achieved by connecting separate closing members 130, as illustrated in FIG. 2, or by welding the opposite ends of the first hollow 121 a and the second hollow 122a. Alternatively, the third sidewall 123 or the fourth sidewall 124 may be coupled to each other to close the opposite ends of each of the first hollow 121 a and the second hollow 122a. That is to say, the third sidewall 123 or the fourth sidewall 124 may be coupled to each other, such that the first sidewall 121 and the second sidewall 122 are positioned therebetween to make the opposite ends of the first hollow 121 a and the second hollow 122a come into contact with the third sidewall 123 and the fourth sidewall 124, respectively. In this case, the third sidewall 123 and the fourth sidewall 124 may function to close the first hollow 121 a and the second hollow 122a in place of the closing members 130.

In addition, an inlet I and an outlet O may be formed in the first sidewall 121 or the second sidewall 122. The inlet I is formed for injecting cooling water into the first hollow 121 a or the second hollow 122a from the outside and the outlet O is formed for discharging the cooling water to the outside.

In FIG. 9, a case in which the inlet I and the outlet O are both formed in the first sidewall 121 is illustrated. Referring to FIG. 9, the inlet I and the outlet O are spaced apart from each other in a lengthwise direction of the first sidewall 121. Here, a partition plate 125 may be installed on the first hollow 121 a of the first sidewall 121 to spatially separate the inlet I and the outlet O from each other. However, in order to allow the cooling water to be injected through the inlet I to then circulate on the first hollow 121 a, the throughhole 110a and the second hollow 122a and to be discharged through the outlet O, the partition plate 125 should be disposed such that the inlet I and the outlet O will communicate with some of the plurality of throughholes 110a, respectively.

In this case, the cooling water flows from a region being at a side of the inlet I, of two regions of the first hollow 121 a, which are partitioned by the partition plate 125, to the second hollow 122a along some of the plurality of throughholes 110a communicating with the region, then flows to another region being at a side of the outlet O along the rest of the plurality of throughholes 110a and is finally discharged to the outside through the outlet O.

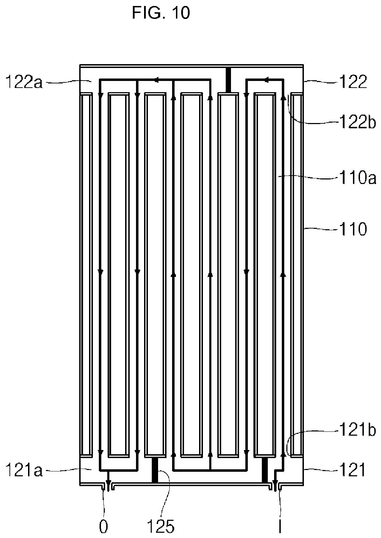

Here, the passageway type of the cooling water may be easily modified by changing only the number and position of the partition plate 125, as illustrated in FIG. 10. In FIG. 10, two partition plates 125 are installed on the first hollow 121 a and one partition plate 125 is installed on the second hollow 122a. Here, on the basis of a direction perpendicular to the direction in which the throughholes 110a are formed, the partition plate 125 installed on the second hollow 122a is positioned between the two partition plates 125 installed on the first hollow 121 a. In the aforementioned case described above with reference to FIG. 7, the passageway of the cooling water is implemented in a substantially U-letter type. In this case, however, the passageway of the cooling water is implemented in a substantially M-letter type.

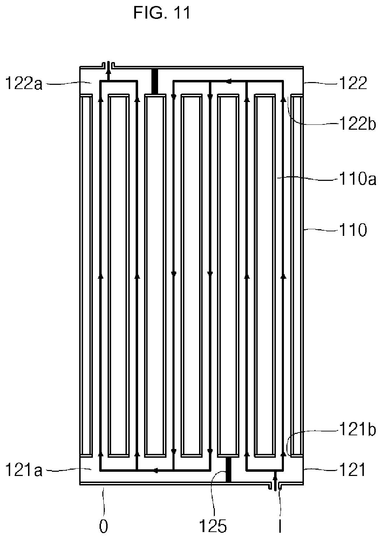

As illustrated in FIG. 11, the inlet I may be formed in the first sidewall 121 and the outlet O may be formed in the second sidewall 122, so that the partition plates 125 are formed on the first hollow 121 a and the second hollow 122a, respectively. In this case, on the basis of a direction perpendicular to the direction in which the throughholes 110a are formed, the inlet I, the partition plate 125 installed on the first hollow 121 a, the partition plate 125 installed on the second hollow 122a and the outlet O are sequentially arranged in that order. However, in order to allow the cooling water to be injected through the inlet I to then circulate on the first hollow 121 a, the throughhole 110a and the second hollow 122a and to be discharged through the outlet O, the partition plate 125 installed on the first hollow 121 a should be disposed between two arbitrary throughholes 110a while the partition plate 125 installed on the second hollow 122a should be disposed between two other neighboring throughholes 110a. The, as indicated by arrows in FIG. 11, the passageway of the cooling water is implemented in a substantially N-letter type.

Additionally, the passageway type of the cooling water may be defined in various manners by further changing only the number and position of the partition plate 125, and no further illustration will be given.

Referring again to FIG. 2, the third sidewall 123 and the fourth sidewall 124 are coupled to edges of the bottom plate 110 other than the edges coupled to the first sidewall 121 and the second sidewall 122, respectively. The third sidewall 123 and the fourth sidewall 124 may also be fabricated by extrusion molding to have a double wall structure, as stated above, thereby effectively protecting the battery modules M from external shocks.

In particular, the first sidewall 121, the second sidewall 122, the third sidewall 123 and the fourth sidewall 124 can be formed by being cut from a long-extruded object by a predetermined length. That is to say, the first communicating hole 121 b and the second communicating hole 122b may further be processed on the cut object to be used as the first sidewall 121 and the second sidewall 122, respectively. Alternatively, if no other holes are processed on the cut object, the first communicating hole 121b and the second communicating hole 122b may also be used as the third sidewall 123 and the fourth sidewall 124, respectively.

Meanwhile, the reinforcement rib 140 is formed to extend between each of the first to fourth sidewalls 121 to 124, thereby reinforcing structural strengths. Although the reinforcement rib 140 illustrated in FIG. 2 is formed to extend between the first sidewall 121 and the second sidewall 122 and between the third sidewall 123 and the fourth sidewall 124, it may be formed to extend between the first sidewall 121 and the third sidewall 123 according to the way in which the battery modules M are arranged.

As illustrated in FIGS. 5A to 5E, the plurality of throughholes 110a of the bottom plate 110 are formed to have different areas and shapes. Cooling water generally has temperatures gradually rising toward a downstream side due to the heat transferred from the battery modules M. Therefore, the throughholes 110a of the bottom plate 110 may be configured to exchange heat over areas gradually increasing toward the downstream side, thereby cooling the overall battery modules M more uniformly.

In a case of fabricating the bottom plate 110 by extrusion molding, the areas or shapes of the throughholes 110a can be easily modified by varying the area or shape of the mandrel used during the extrusion molding.

As described above, in the battery pack housing according to an embodiment of the present invention, a separate protective cover is not necessarily provided and a bottom plate may function as the protective cover. In addition, in the battery pack housing according to an embodiment of the present invention, the bottom plate is formed to have a double-plate structure including an upper plate and a lower plate, which are formed by extrusion molding, thereby sufficiently protecting the battery pack from shocks applied from a bottom portion of an automotive vehicle, etc. by providing a rigid protective bottom plate while reducing the number of parts.

In addition, various components of the battery pack housing according to the present invention are formed by, for example, extrusion molding, so that a built-in cooling water passageway is formed in the battery pack housing. Therefore, the configuration of the battery pack housing can be simplified and the battery pack housing can be easily manufactured.

While the present invention have been particularly shown and described with reference to embodiments thereof, it will be understood by those of ordinary skill in the art that various changes in form and details may be made therein without departing from the scope of the present invention as defined by the following claims.

## Claims

1. A battery pack housing for an automotive vehicle, the battery pack housing comprising:
a bottom plate shaped of a plate fabricated by extrusion molding to form an upper plate and a lower plate integrated into a single body
and including a throughhole passing through the inside of the bottom plate in a direction parallel with a plate surface from a region of the upper plate or the lower plate;
a first sidewall coupled to one edge of the bottom plate so as to come into contact with a first end of the throughhole and including a first hollow and a first communicating hole formed therein, the first hollow passing through the inside of the first sidewall in a lengthwise direction of the first sidewall and the first communicating hole connecting the throughhole of the bottom plate and the first hollow;
a second sidewall coupled to the other edge of the bottom plate so as to come into contact with a second end of the throughhole, the second end opposing the first end, and including a second hollow and a second communicating hole formed therein, the second hollow passing through the inside in a lengthwise direction of the second sidewall and the second communicating hole connecting the throughhole of the bottom plate and the second hollow;
an inlet formed in the first sidewall or the second sidewall and allowing cooling water to be injected into the first hollow or the second hollow; and;
an outlet formed in the first sidewall or the second sidewall and allowing the cooling water to be discharged from the first hollow or the second hollow to the outside.

2. A battery pack housing according to claim 1, wherein at least one of the first sidewall and the second sidewall is fabricated by extrusion molding during extrusion.

3. A battery pack housing according to claim 1 or 2, further comprising closing members for closing both ends of the first hollow of the first sidewall and the second hollow of the second sidewall, respectively.

4. A battery pack housing according to claim 1, 2 or 3, wherein the throughhole is formed in the upper plate.

5. A battery pack housing according to any preceding claim, wherein the upper plate includes a protrusion part extending from the upper plate to the lower plate to communicate with the lower plate and the throughhole is formed in the protrusion part.

6. A battery pack housing of claim 5, wherein the protrusion part is formed to function as a bridge for connecting the upper plate and the lower plate.

7. A battery pack housing according to any preceding claim, wherein a cross section of the throughhole has an area gradually increasing toward the upper plate.

8. A battery pack housing according to one of claims 5 to 7, wherein the cross sectional center of the protrusion part or the throughhole is closer to the upper plate than to the lower plate.

9. A battery pack housing according to any preceding claim, wherein the throughhole of the bottom plate includes a plurality of throughholes to then be arranged to be parallel with each other.

10. A battery pack housing according to claim 9, wherein the inlet and the outlet are formed in the first sidewall and are spaced apart from each other in a lengthwise direction of the first sidewall, a partition plate is installed on the first hollow of the first sidewall to spatially separate the inlet and the outlet from each other, and the inlet and the outlet are arranged to communicate with some of the plurality of throughholes.

11. A battery pack housing according to claim 9, wherein the inlet is formed in the first sidewall, the outlet is formed in the second sidewall, and a first partition plate and a second partition plate are formed respectively for spatially separating two arbitrary throughholes adjacent with each other on the first hollow of the first sidewall and for spatially separating two arbitrary throughholes adjacent with each other on the second hollow of the second sidewall, wherein on the basis of a direction perpendicular to the direction in which the throughholes are formed, the inlet, the first partition plate, the second partition plate and the outlet are sequentially arranged in that order.

12. A battery pack housing according to claim 9, wherein some of the plurality of throughholes in the bottom plate are differently formed from some other throughholes in view of area and shape of a cross section perpendicular to the direction in which the throughholes are formed.

13. A battery pack housing according to any preceding claim, further comprising a reinforcement rib formed to extend between the first sidewall and the second sidewall.

14. A battery pack housing according to any preceding claim, further comprising a third sidewall formed at an edge of the bottom plate, the edge not being coupled to the first sidewall or the second sidewall.
